# EUROPÄISCHE PATENTANMELDUNG

(11) **EP 3 546 909 A1**
(43) Veröffentlichungstag der Anmeldung: **02.10.2019**
(21) Anmeldenummer: 19163420.3
(22) Anmeldetag: 18.03.2019
(51) Int. Cl.: G01K 17/06, F24D 19/10

(54) **HEIZKÖRPERDATENSPEICHER, HEIZKÖRPERANORDNUNG, PARAMETRIEREINHEIT, ELEKTRONISCHER HEIZKOSTENVERTEILER SOWIE VORRICHTUNG UND VERFAHREN ZUM PARAMETRIEREN EINES ELEKTRONISCHEN HEIZKOSTENVERTEILERS**

(30) Priorität: 28.03.2018 DE 102018107384
(71) Anmelder: QUNDIS GmbH, 99098 Erfurt (DE)
(72) Erfinder: KUHN, Jens, 98693 Ilmenau (DE)
(74) Vertreter: Liedtke & Partner Patentanwälte

(57) **Zusammenfassung**

Die Erfindung betrifft einen Heizkörperdatenspeicher (3) mit mindestens einem zur Parametrierung eines elektronischen Heizkostenverteilers (4) verwendbaren gespeicherten Heizkörperparameter (P) eines Heizkörpers (2).

Erfindungsgemäß ist der Heizkörperdatenspeicher (3) als ein optoelektronisch auslesbarer Datenspeicher ausgebildet.

Des Weiteren betrifft die Erfindung eine Heizkörperanordnung (1), eine Parametriereinheit (5), einen elektronischen Heizkostenverteiler (4), eine Vorrichtung (10) zum Parametrieren eines elektronischen Heizkostenverteilers (4) und ein Verfahren zum Parametrieren eines elektronischen Heizkostenverteilers (4).

## Beschreibung

Die Erfindung betrifft einen Heizkörperdatenspeicher nach den Merkmalen des Oberbegriffs des Anspruchs 1, eine Heizkörperanordnung, eine Parametriereinheit, einen elektronischen Heizkostenverteiler, eine Vorrichtung zum Parametrieren eines elektronischen Heizkostenverteilers und ein Verfahren zum Parametrieren eines elektronischen Heizkostenverteilers.

Um eine ordnungsgemäße Funktion eines elektronischen Heizkostenverteilers sicherzustellen, ist es erforderlich, diesen entsprechend eines jeweiligen Heizkörpers, für welchen er vorgesehen ist, zu parametrieren. Hierzu ist es aus dem Stand der Technik bekannt, dass ein Monteur, welcher den elektronischen Heizkostenverteiler am Heizkörper befestigt, den jeweiligen Heizkörper anhand von Aufmaßtabellen identifiziert und eine entsprechende Parametrierung des für diesen Heizkörper vorgesehenen elektronischen Heizkostenverteilers durch eine manuelle Eingabe von jeweiligen Heizkörperparametern vornimmt. Dies ist mit einem großen Zeitaufwand verbunden. Zudem kann eine fehlerhafte Eingabe der Heizkörperparameter erfolgen.

In der DE 103 17 476 B3 der Anmelderin, deren vollständiger Inhalt hiermit durch Referenz aufgenommen wird, ist ein Heizkörper bekannt, welcher einen elektronischen Heizkostenverteiler zum Messen der abgegebenen Wärmemenge des Heizkörpers aufweist. Des Weiteren weist der Heizkörper einen separaten elektronischen Heizkörperdatenspeicher auf, welchen der Heizkörperhersteller mit den notwendigen heizkörperspezifischen Daten versieht. Mittels einer Übertragungseinrichtung in Form eines Transponderadapters werden die heizkörperspezifischen Daten von dem Heizkörperdatenspeicher auf den elektronischen Heizkostenverteiler übertragen.

Der Erfindung liegt die Aufgabe zu Grunde, einen gegenüber dem Stand der Technik verbesserten Heizkörperdatenspeicher, eine gegenüber dem Stand der Technik verbesserte Heizkörperanordnung, eine gegenüber dem Stand der Technik verbesserte Parametriereinheit, einen gegenüber dem Stand der Technik verbesserten elektronischen Heizkostenverteiler, eine gegenüber dem Stand der Technik verbesserte Vorrichtung zum Parametrieren eines elektronischen Heizkostenverteilers und ein gegenüber dem Stand der Technik verbessertes Verfahren zum Parametrieren eines elektronischen Heizkostenverteilers anzugeben.

Die Aufgabe wird erfindungsgemäß gelöst durch einen Heizkörperdatenspeicher mit den Merkmalen des Anspruchs 1, eine Heizkörperanordnung mit den Merkmalen des Anspruchs 5, eine Parametriereinheit mit den Merkmalen des Anspruchs 6, einen elektronischen Heizkostenverteiler mit den Merkmalen des Anspruchs 8, eine Vorrichtung zum Parametrieren eines elektronischen Heizkostenverteilers mit den Merkmalen des Anspruchs 9 und ein Verfahren zum Parametrieren eines elektronischen Heizkostenverteilers mit den Merkmalen des Anspruchs 10.

Vorteilhafte Ausgestaltungen der Erfindung sind Gegenstand der Unteransprüche.

Ein Heizkörperdatenspeicher mit mindestens einem zur Parametrierung eines elektronischen Heizkostenverteilers verwendbaren gespeicherten Heizkörperparameter eines Heizkörpers ist erfindungsgemäß als ein optoelektronisch auslesbarer Datenspeicher ausgebildet. Dieser erfindungsgemäße Heizkörperdatenspeicher ermöglicht mit geringen Aufwand sowie auf einfache, schnelle, sichere und fehlerunanfällige Weise die Parametrierung des elektronischen Heizkostenverteilers durch Auslesen des mindestens einen Heizkörperparameters mittels einer Parametriereinheit, mittels welcher danach der für den Heizkörper vorgesehene elektronische Heizkostenverteiler, welcher an dem Heizkörper montiert werden soll oder bereits montiert ist, anhand des mindestens einen vom Heizkörperdatenspeicher ausgelesenen Heizkörperparameters parametriert wird, insbesondere durch Übertragung des mindestens einen vom Heizkörperdatenspeicher ausgelesenen Heizkörperparameters mittels der Parametriereinheit auf den elektronischen Heizkostenverteiler, beispielsweise nach einer Umwandlung in der Parametriereinheit in eine vom elektronischen Heizkostenverteiler anwendbare Form.

Insbesondere ist hierfür keine Nutzung von beispielsweise lizenzpflichtigen Heizkörperdatenbanken erforderlich, da die erforderlichen Informationen zur Parametrierung nicht aus einer solchen Datenbank abgerufen werden müssen, denn sie sind im Heizkörperdatenspeicher gespeichert und können aus diesem ausgelesen werden. Insbesondere werden mittels der erfindungsgemäßen Lösung ein Zeit- und Kostenaufwand zur Parametrierung des elektronischen Heizkostenverteilers erheblich reduziert.

Durch die mittels der erfindungsgemäßen Lösung ermöglichte korrekte Parametrierung des elektronischen Heizkostenverteilers wird eine Verteilgenauigkeit der Heizkosten erhöht. Dadurch werden beispielsweise bei einem Messdienst und/oder bei einem Wohnungsunternehmen anfallende Reklamationen bezüglich der Heizkosten reduziert.

Ein besonderer Vorteil des erfindungsgemäßen Heizkörperdatenspeichers ist zudem, dass er keine elektronischen Bauteile enthält, die durch eine Wärmeabgabe des Heizkörpers beschädigt werden könnten. Dadurch ist der erfindungsgemäße Heizkörperdatenspeichers auch nach längerem Betrieb des Heizkörpers weiterhin auslesbar. Auf diese Weise wird beispielsweise bei einem Austausch des elektronischen Heizkostenverteilers, zum Beispiel nach Ablauf von dessen Lebensdauer von beispielsweise zehn Jahren auch die Parametrierung des neuen elektronischen Heizkostenverteilers durch Auslesen des erfindungsgemäßen Heizkörperdatenspeichers auf die beschriebene einfache Weise ermöglicht. Des Weiteren ist keine störanfällige elektromagnetische Datenübertragung zum Auslesen des Heizkörperdatenspeichers erforderlich. Ein weiterer, wesentlicher Vorteil des erfindungsgemäßen Heizkörperdatenspeichers ist sein äußerst günstiger Preis.

Der mindestens eine Heizkörperparameter ist insbesondere als ein optoelektronisch lesbarer Code gespeichert, insbesondere als eine optoelektronisch lesbare Schrift, insbesondere als ein eindimensionaler oder zweidimensionaler Code, insbesondere als ein Strichcode, auch als Barcode, Balkencode oder Streifencode bezeichnet, oder als ein QR-Code. Ein solcher Code kann auf einfache Weise ausgelesen werden, so dass insbesondere ein Vorrichtungsaufwand zum Auslesen dieses Codes sehr gering ist. Die Auswahl des jeweiligen Codes erfolgt beispielsweise in Abhängigkeit von einem zu speichernden Informationsgehalt, da beispielsweise mittels eines zweidimensionalen Codes, zum Beispiel mittels eines QR-Codes, größere Datenmengen speicherbar sind als mittels eines eindimensionalen Codes, zum Beispiel mittels eines Strichcodes. D. h. der mindestens eine Heizkörperparameter ist auf die beschriebene Weise codiert auf dem Heizkörperdatenspeicher gespeichert, so dass dieser optoelektronisch lesbare Code den mindestens einen Heizkörperparameter enthält.

Als Heizkörperparameter sind/ist beispielsweise mindestens eine Information bezüglich einer Heizkörperleistung und/oder mindestens eine Information bezüglich einer thermischen Kopplung des elektronischen Heizkostenverteilers mit dem Heizkörper gespeichert, insbesondere ein K_{Q}-Wert und/oder ein K_{C}-Wert des Heizkörpers. Der K_{C}-Wert ist, insbesondere nach DIN EN 834:2013-12, definiert als der Quotient aus der Basisanzeigegeschwindigkeit und der Anzeigegeschwindigkeit bei den Temperaturen der Sensoren am zu bewertenden Heizkörper im Basiszustand. Der Bewertungsfaktor K_{Q} ist der (dimensionslose) Zahlenwert der in Watt ausgedrückten Normleistung des Heizkörpers. Die Normleistung ist die Wärmeleistung eines Heizkörpers, insbesondere nach DIN EN442-2:1996, die in einer klimastabilen Prüfkabine bei einer Vorlauftemperatur von 75 °C, einer Rücklauftemperatur von 65 °C und einer Lufttemperaturen von 20 °C gemessen wird. Dabei wird die Lufttemperatur in 0,75 m über dem Fußboden in einem Abstand von 1,5 m vor der Heizfläche gemessen.

Alternativ oder zusätzlich kann beispielsweise als Heizkörperparameter der Wert des Heizkörperexponenten, die Typbezeichnung des Heizkörpers oder ein Web-Link (d. h. insbesondere eine Internet-Adresse) zu einem Datenblatt des Heizkörpers gespeichert sein.

Durch derartige Heizkörperparameter wird insbesondere die in der EN834 geforderte Parametrierung des elektronischen Heizkostenverteilers ermöglicht.

Der Heizkörperdatenspeicher ist beispielsweise als ein am Heizkörper anordbares Etikett ausgebildet, welches zum Beispiel stoffschlüssig, beispielsweise durch Kleben, formschlüssig und/oder kraftschlüssig am Heizkörper anordbar ist. Derartige Etiketten mit beispielsweise aufgedruckter optoelektronisch lesbarer Information, zum Beispiel in Form eines der oben erwähnten Codes, sind auf besonders einfache und kostengünstige Weise herzustellen und am Heizkörper anzubringen. Um das Design des Heizkörpers nicht zu beeinflussen, kann ein solcher beispielsweise als Etikett ausgebildeter Heizkörperdatenspeicher beispielsweise so angebracht werden, dass er nicht im Sichtbereich angeordnet ist, also zum Beispiel auf der Rück- oder der Unterseite des Heizkörpers. Die Anordnung des Heizkörperdatenspeichers ist jedoch nicht auf diese Positionen des Heizkörpers beschränkt, d. h. eine Anordnung auf der Vorderseite, Oberseite oder an einer der beiden seitlichen Stirnseiten wäre ebenfalls möglich.

Eine erfindungsgemäße Heizkörperanordnung umfasst einen Heizkörper und den oben beschriebenen daran angeordneten Heizkörperdatenspeicher mit mindestens einem gespeicherten Heizkörperparameter des Heizkörpers. Der Heizkörperdatenspeicher ist beispielsweise stoffschlüssig, zum Beispiel durch Kleben, und/oder formschlüssig und/oder kraftschlüssig am Heizkörper befestigt. Dadurch werden auch mittels der Heizkörperanordnung die oben bereits beschriebenen Vorteile erzielt. Insbesondere ist durch die Anordnung des Heizkörperdatenspeichers am Heizkörper sichergestellt, dass der oder die korrekten Heizkörperparameter zum Parametrieren des elektronischen Heizkostenverteilers verwendet werden. Verwechslungen, welche beispielsweise bei einem Suchen der Heizkörperparameter in einer Tabelle mit einer Vielzahl von Heizkörpern auftreten können, sind durch die erfindungsgemäße Lösung somit ausgeschlossen.

Eine erfindungsgemäße Parametriereinheit umfasst mindestens eine optoelektronische Leseeinheit zum Auslesen des Heizkörperdatenspeichers und mindestens eine Datenübertragungsschnittstelle für eine Datenübertragungsverbindung zum elektronischen Heizkostenverteiler. Damit wird auf einfache Weise das Parametrieren des elektronischen Heizkostenverteilers ermöglicht, wodurch die oben bereits geschilderten Vorteile erreicht werden.

Der Vorteil dieser separaten Parametriereinheit ist insbesondere, dass mittels einer einzelnen Parametriereinheit eine Vielzahl von elektronischen Heizkostenverteilern parametriert werden können, so dass es nicht erforderlich ist, die Komponenten zum Auslesen von Heizkörperdatenspeichern in allen elektronischen Heizkostenverteilern zu integrieren, was einen wesentlich höheren Kostenaufwand, Materialaufwand und Fertigungsaufwand zur Herstellung der elektronischen Heizkostenverteiler bedeuten würde.

Mittels der Parametriereinheit wird der mindestens eine Heizkörperparameter aus dem Heizkörperdatenspeicher ausgelesen, insbesondere durch Auslesen des Codes, mittels welchem der mindestens eine Heizkörperparameter codiert ist, beispielsweise decodiert und/oder in eine für den elektronischen Heizkostenverteiler verwendbare Form umgewandelt und damit der elektronische Heizkostenverteiler über eine von der Parametriereinheit zwischen dieser und dem elektronischen Heizkostenverteiler aufgebaute Datenübertragungsverbindung parametriert, insbesondere durch Übertragung des mindestens einen Heizkörperparameters an den elektronischen Heizkostenverteiler. Hierzu ist die Parametriereinheit entsprechend ausgebildet und eingerichtet, insbesondere bezüglich des Auslesens des Heizkörperdatenspeichers, gegebenenfalls bezüglich des Decodierens und/oder Umwandelns in die vom elektronischen Heizkostenverteiler anwendbare Form und bezüglich der Datenübertragungsschnittstelle, welche korrespondierend zu einer Datenübertragungsschnittstelle des elektronischen Heizkostenverteilers ausgebildet ist, um die Datenübertragungsverbindung aufbauen zu können.

Insbesondere wenn die Parametriereinheit zum Auslesen mindestens eines, insbesondere auf die oben beschriebene Weise, codierten Heizkörperparameters ausgebildet ist, umfasst sie vorteilhafterweise eine Decodiereinheit zum Decodieren des optoelektronisch gelesenen Codes. Dadurch kann der Code entschlüsselt und der darin enthaltene mindestens eine Heizkörperparameter ermittelt und zur Parametrierung des elektronischen Heizkostenverteilers verwendet werden.

Die mindestens eine Datenübertragungsschnittstelle ist beispielsweise als eine kontaktlose Datenübertragungsschnittstelle ausgebildet, zum Beispiel als eine optische Schnittstelle, beispielsweise als eine Infrarotdatenübertragungsschnittstelle, insbesondere als eine IrDA-Schnittstelle, oder als eine Funkschnittstelle, beispielsweise als eine Bluetooth-, RFID-, NFC- oder WLAN-Schnittstelle, oder sie ist beispielsweise als eine kontaktbehaftete Datenübertragungsschnittstelle ausgebildet, insbesondere als eine elektrische Kontaktierungsschnittstelle, insbesondere als eine Nadelkontaktschnittstelle. Eine solche Nadelkontaktschnittstelle umfasst eine Mehrzahl von Nadelkontakten, mittels welchen entsprechende Kontakte, beispielsweise Leiterbahnen oder Anschlüsse, am elektronischen Heizkostenverteiler elektrisch kontaktiert werden können.

Die mindestens eine optoelektronische Leseeinheit umfasst beispielsweise einen CCD-Scanner, einen Laserscanner und/oder eine Kamera. Insbesondere bei einer Ausbildung als Kamera können eine Vielzahl von Geräten als Parametriereinheit oder als Teil der Parametriereinheit verwendet werden, welche eine solche Kamera bereits aufweisen, beispielweise ein Mobiltelefon, insbesondere ein so genanntes Smartphone, ein Tabletcomputer oder ein anderer tragbarer Computer, beispielsweise ein Laptop oder Notebook. Derartige Geräte können auch bereits die Decodiereinheit und die Datenübertragungsschnittstelle umfassen.

Alternativ kann vorgesehen sein, einzelne Komponenten miteinander zu koppeln, um die Parametriereinheit auszubilden, beispielsweise einen Computer mit den nicht bereits darin enthaltenen Komponenten zu koppeln, zum Beispiel mit der optoelektronische Leseeinheit und/oder der Decodiereinheit und/oder der Datenübertragungsschnittstelle, wobei ein solcher Computer beispielsweise selbst die Decodoiereinheit ist. Auf diese Weise kann beispielsweise auch ein Desktopcomputer als Parametriereinheit verwendet werden, welcher hierzu beispielsweise mit der optoelektronischen Leseeinheit gekoppelt wird und, falls nicht bereits vorhanden, mit der Datenübertragungsschnittstelle gekoppelt wird.

Ein erfindungsgemäßer elektronischer Heizkostenverteiler ist ausgebildet und eingerichtet zur Parametrierung mittels einer oben beschriebenen Parametriereinheit. Insbesondere ist er ausgebildet und eingerichtet zur Datenkommunikation mit der Parametriereinheit, d. h. er weist insbesondere eine Datenübertragungsschnittstelle, insbesondere eine zur Datenübertragungsschnittstelle der Parametriereinheit korrespondierende Datenübertragungsschnittstelle, zur Ausbildung einer Datenübertragungsverbindung zwischen Parametriereinheit und elektronischem Heizkostenverteiler auf. Des Weiteren ist er insbesondere derart ausgebildet und eingerichtet, dass Parametrierungseinstellungen über diese Datenübertragungsschnittstelle des elektronischen Heizkostenverteilers möglich sind.

Eine erfindungsgemäße Vorrichtung zum Parametrieren eines elektronischen Heizkostenverteilers umfasst den Heizkörperdatenspeicher und die Parametriereinheit. Dadurch wird auf die oben bereits beschriebene einfache Weise die Parametrierung des elektronischen Heizkostenverteilers ermöglicht, wodurch die bereits geschilderten Vorteile erzielt werden.

In einem erfindungsgemäßen Verfahren zum Parametrieren des elektronischen Heizkostenverteilers wird mittels der Parametriereinheit, insbesondere von deren optoelektronischer Leseeinheit, mindestens ein Heizkörperparameter aus dem Heizkörperdatenspeicher ausgelesen, es wird, insbesondere über die Datenübertragungsschnittstelle der Parametriereinheit, eine Datenübertragungsverbindung zwischen der Parametriereinheit und dem elektronischen Heizkostenverteiler, insbesondere zwischen der Datenübertragungsschnittstelle der Parametriereinheit und der Datenübertragungsschnittstelle des elektronischen Heizkostenverteilers, aufgebaut und der elektronische Heizkostenverteiler wird mittels des mindestens einen ausgelesenen Heizkörperparameters parametriert, insbesondere durch Übertragen des mindestens einen ausgelesenen Heizkörperparameters von der Parametriereinheit auf den elektronischen Heizkostenverteiler, beispielsweise nach einer Umwandlung des mindestens einen Heizkörperparameters durch die Parametriereinheit in eine für den elektronischen Heizkostenverteiler anwendbare Form.

Dadurch werden die oben bereits geschilderten Vorteile erzielt. Insbesondere kann der elektronische Heizkostenverteiler auf einfache und sichere Weise und mit einem geringen Zeit- und Kostenaufwand fehlerfrei parametriert werden.

Ist der mindestens eine Heizkörperparameter auf die oben beschriebene Weise codiert im Heizkörperdatenspeicher gespeichert, wird entsprechend der codierte mindestens eine Heizkörperparameter aus dem Heizkörperdatenspeicher ausgelesen, d. h. es wird der, insbesondere optoelektronisch lesbare, Code ausgelesen, der den mindestens einen Heizkörperparameter enthält, und von der Parametriereinheit decodiert, insbesondere von deren Decodiereinheit. Die Umwandlung in die vom elektronischen Heizkostenverteiler anwendbare Form kann beispielsweise diese Decodierung sein und/oder eine oder mehrere andere Umwandlungsmaßnahmen umfassen. Der elektronische Heizkostenverteiler wird dann mittels des mindestens einen auf diese Weise ausgelesenen und decodierten und/oder umgewandelten Heizkörperparameters parametriert, insbesondere durch Übertragen dieses mindestens einen auf die beschriebene Weise ausgelesenen und decodierten und/oder umgewandelten Heizkörperparameters von der Parametriereinheit auf den elektronischen Heizkostenverteiler, insbesondere indem die Datenübertragungsverbindung zwischen der Parametriereinheit, insbesondere zwischen der Datenübertragungsschnittstelle der Parametriereinheit, und dem elektronischen Heizkostenverteiler, insbesondere der Datenübertragungsschnittstelle des elektronischen Heizkostenverteilers, aufgebaut wird und der elektronische Heizkostenverteiler mittels des mindestens einen ausgelesenen Heizkörperparameters parametriert wird.

Ausführungsbeispiele der Erfindung werden im Folgenden anhand einer Zeichnung näher erläutert.

Darin zeigt:

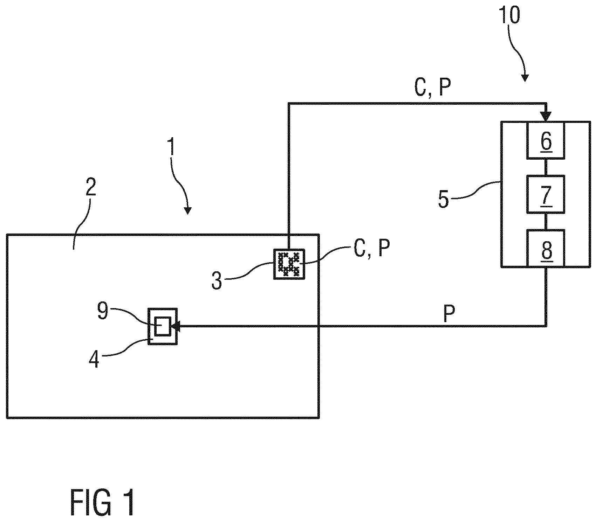

- Figur 1: eine schematische Darstellung eines Heizkörpers und einer Parametriereinheit, wobei an dem Heizkörper ein Heizkörperdatenspeicher und ein elektronischer Heizkostenverteiler angeordnet sind.

**Figur 1** zeigt in einer schematischen Darstellung eine Heizkörperanordnung 1, umfassend einen Heizkörper 2 und einen daran angeordneten Heizkörperdatenspeicher 3. Des Weiteren zeigt Figur 1 einen am Heizkörper 2 angeordneten elektronischen Heizkostenverteiler 4 und eine Parametriereinheit 5 zum Parametrieren des elektronischen Heizkostenverteilers 4. Der Heizkörperdatenspeicher 3 und die Parametriereinheit 5 sind Bestandteile einer Vorrichtung 10 zum Parametrieren des elektronischen Heizkostenverteilers 4.

Mittels der Parametriereinheit 5 wird mindestens ein in dem Heizkörperdatenspeicher 3 gespeicherter Heizkörperparameter P des Heizkörpers 2 ausgelesen und zum Parametrieren des elektronischen Heizkostenverteilers 4 verwendet, wobei zum Parametrieren insbesondere der mindestens eine ausgelesene Heizkörperparameter P mittels der Parametriereinheit 5 auf den elektronischen Heizkostenverteiler 4 übertragen wird, beispielsweise nachdem er von der Parametriereinheit 5 in eine vom elektronischen Heizkostenverteiler 4 anwendbare Form umgewandelt wurde.

Ein solches Parametrieren des elektronischen Heizkostenverteilers 4 wird grundsätzlich bereits in der DE 103 17 476 B3 der Anmelderin beschrieben, deren vollständiger Inhalt hiermit durch Referenz aufgenommen wird. Ein wesentlicher Unterschied zu diesem Stand der Technik besteht darin, dass bei der hier beschriebenen Lösung der Heizkörperdatenspeicher 3 als ein optoelektronisch auslesbarer Datenspeicher ausgebildet ist, insbesondere als ein grafischer Datenspeicher.

Dadurch weist der Heizkörperdatenspeicher 3 keine elektronischen Bauteile auf, die durch eine Wärmeabgabe des Heizkörpers 2 beschädigt werden könnten, so dass eine solche Parametrierung des elektronischen Heizkostenverteilers 4 und das hierfür erforderliche Auslesen des Heizkörperdatenspeichers 3 auch nach längerem Betrieb des Heizkörpers 2 und daraus resultierenden Temperatureinflüssen auf den Heizkörperdatenspeicher 3 noch problemlos möglich ist. Zudem ist durch das optoelektronische Auslesen keine möglicherweise störanfällige elektromagnetische Datenübertragung vom Heizkörperdatenspeicher 3 auf die Parametriereinheit 5 erforderlich

Der mindestens eine Heizkörperparameter P ist insbesondere als ein optoelektronisch lesbarer Code C, insbesondere als ein grafischer Code, insbesondere als Bildcode, auf dem Heizkörperdatenspeicher 3 gespeichert, insbesondere als eine optoelektronisch lesbare Schrift, insbesondere als ein eindimensionaler Code (1D-Code), beispielsweise als ein Strichcode, auch als Barcode, Balkencode oder Streifencode bezeichnet, oder als ein zweidimensionaler Code (2D-Code), beispielsweise als ein QR-Code. D. h. der mindestens eine Heizkörperparameter P ist auf die beschriebene Weise codiert auf dem Heizkörperdatenspeicher 3 gespeichert.

Als Heizkörperparameter P sind/ist beispielsweise mindestens eine Information bezüglich einer Heizkörperleistung und/oder mindestens eine Information bezüglich einer thermischen Kopplung des elektronischen Heizkostenverteilers 4 mit dem Heizkörper 2 gespeichert, insbesondere ein K_{Q}-Wert und/oder ein K_{C}-Wert des Heizkörpers 2.

Der K_{C}-Wert ist, insbesondere nach DIN EN 834:2013-12, definiert als der Quotient aus der Basisanzeigegeschwindigkeit und der Anzeigegeschwindigkeit bei den Temperaturen der Sensoren am zu bewertenden Heizkörper im Basiszustand.

Der Bewertungsfaktor K_{Q} ist der (dimensionslose) Zahlenwert der in Watt ausgedrückten Normleistung des Heizkörpers 2. Die Normleistung ist die Wärmeleistung eines Heizkörpers 2, insbesondere nach DIN EN442-2:1996, die in einer klimastabilen Prüfkabine bei einer Vorlauftemperatur von 75 °C, einer Rücklauftemperatur von 65 °C und einer Lufttemperaturen von 20 °C gemessen wird. Dabei wird die Lufttemperatur in 0,75 m über dem Fußboden in einem Abstand von 1,5 m vor der Heizfläche gemessen.

Alternativ oder zusätzlich kann beispielsweise als Heizkörperparameter P der Wert des Heizkörperexponenten, die Typbezeichnung des Heizkörpers oder ein Web-Link (d. h. insbesondere eine Internet-Adresse) zu einem Datenblatt des Heizkörpers gespeichert sein.

Der Heizkörperdatenspeicher 3 ist beispielsweise als ein Etikett ausgebildet, welches am Heizkörper 2 stoffschlüssig, beispielsweise durch Kleben, formschlüssig und/oder kraftschlüssig befestigt ist. Um das Design des Heizkörpers 2 nicht zu beeinflussen, kann ein solches Etikett selbstverständlich auch so angebracht werden, dass es nicht im Sichtbereich angeordnet ist, also zum Beispiel auf der Rück- oder der Unterseite des Heizkörpers.

Die Parametriereinheit 5 umfasst mindestens eine optoelektronische Leseeinheit 6 zum Auslesen des Heizkörperdatenspeichers 3, zweckmäßigerweise eine Decodiereinheit 7, falls der mindestens eine Heizkörperparameter P auf die oben beschriebene Weise codiert auf dem Heizkörperdatenspeicher 3 gespeichert ist und decodiert werden muss, d. h. falls der Code C, welcher den mindestens einen Heizkörperparameter P enthält, ausgelesen und decodiert werden muss, und mindestens eine Datenübertragungsschnittstelle 8 für eine Datenübertragungsverbindung zum elektronischen Heizkostenverteiler 4, um diesen zu parametrieren, insbesondere durch Übertragen des mindestens einen aus dem Heizkörperdatenspeicher 3 ausgelesenen Heizkörperparameters P auf den elektronischen Heizkostenverteiler 4, beispielsweise nach einer Umwandlung in eine für den elektronischen Heizkostenverteiler 4 anwendbare Form. Diese Umwandlung kann beispielsweise in der Decodiereinheit 7 erfolgen und beispielsweise das Decodieren und/oder einen oder mehrere andere Umwandlungsschritte umfassen.

Die mindestens eine Datenübertragungsschnittstelle 8 der Parametriereinheit 5 ist beispielsweise als eine kontaktlose Datenübertragungsschnittstelle 8 ausgebildet, zum Beispiel als eine optische Schnittstelle, insbesondere als eine IrDA-Schnittstelle, oder als eine Funkschnittstelle, beispielsweise als eine Bluetooth-, RFID-, NFC- oder WLAN-Schnittstelle, oder sie ist beispielsweise als eine kontaktbehaftete Datenübertragungsschnittstelle 8 ausgebildet, insbesondere als eine elektrische Kontaktierungsschnittstelle, insbesondere als eine Nadelkontaktschnittstelle. Eine solche Nadelkontaktschnittstelle umfasst eine Mehrzahl von Nadelkontakten, mittels welchen entsprechende Kontakte, beispielsweise Leiterbahnen oder Anschlüsse, am elektronischen Heizkostenverteiler 4 elektrisch kontaktiert werden können.

Die mindestens eine optoelektronische Leseeinheit 6 umfasst beispielsweise einen CCD-Scanner, einen Laserscanner und/oder eine Kamera. Insbesondere bei einer Ausbildung als Kamera können eine Vielzahl von Geräten als Parametriereinheit 5 oder als Teil der Parametriereinheit 5 verwendet werden, welche eine solche Kamera bereits aufweisen, beispielweise ein Mobiltelefon, insbesondere ein so genanntes Smartphone, ein Tabletcomputer oder ein anderer tragbarer Computer, beispielsweise ein Laptop oder Notebook.

Derartige Geräte können auch bereits die Decodiereinheit 7 und/oder die Datenübertragungsschnittstelle 8 umfassen. Alternativ kann vorgesehen sein, einzelne Komponenten miteinander zu koppeln, um die Parametriereinheit 5 auszubilden, beispielsweise einen Computer mit den nicht bereits darin enthaltenen Komponenten zu koppeln, zum Beispiel mit der optoelektronische Leseeinheit 6 und/oder der Decodiereinheit 7 und/oder der Datenübertragungsschnittstelle 8, wobei ein solcher Computer beispielsweise selbst die Decodiereinheit 7 ist. Auf diese Weise kann beispielsweise auch ein Desktopcomputer als Parametriereinheit 5 verwendet werden, welcher hierzu beispielsweise mit der optoelektronischen Leseeinheit 6 gekoppelt wird und, falls nicht bereits vorhanden, mit der Datenübertragungsschnittstelle 8 gekoppelt wird.

Der elektronische Heizkostenverteiler 4 ist derart ausgebildet und eingerichtet, dass er auf die beschriebene Weise mittels der Parametriereinheit 5 parametriert werden kann. Insbesondere weist er eine zur Parametriereinheit 5 korrespondierende Datenübertragungsschnittstelle 9 auf, so dass eine Datenübertragungsverbindung, insbesondere zum Übertragen des mindestens einen Heizkörperparameters P, zwischen der Parametriereinheit 5 und dem elektronischen Heizkostenverteiler 4 aufgebaut werden kann. Des Weiteren ist er insbesondere derart ausgebildet und eingerichtet, dass Parametrierungseinstellungen über diese Datenübertragungsschnittstelle 9 des elektronischen Heizkostenverteilers 4 möglich sind.

In einem Verfahren zum Parametrieren des elektronischen Heizkostenverteilers 4 wird mittels der Parametriereinheit 5, insbesondere mittels deren optoelektronischer Leseeinheit 6, mindestens ein Heizkörperparameter P aus dem Heizkörperdatenspeicher 3 ausgelesen, beispielsweise indem, wie in Figur 1 gezeigt, der optoelektronisch lesbare Code C, welcher den mindestens einen Heizkörperparameter P enthält, d. h. mit welchem der mindestens eine Heizkörperparameter P codiert wurde, gelesen und in der Parametriereinheit 5, insbesondere in deren Decodiereinheit 7, decodiert wird. Das Decodieren des den mindestens einen Heizkörperparameter P enthaltenden Codes C kann beispielsweise dem Umwandeln in eine für den elektronischen Heizkostenverteiler 4 anwendbare Form dienen. Alternativ oder zusätzlich können ein oder mehrere andere Umwandlungsschritte zum Umwandeln in eine für den elektronischen Heizkostenverteiler 4 anwendbare Form vorgesehen sein.

Danach oder beispielsweise auch bereits davor oder währenddessen wird eine Datenübertragungsverbindung von der Parametriereinheit 5 zum elektronischen Heizkostenverteiler 4 aufgebaut und der elektronische Heizkostenverteiler 4 wird mittels des mindestens einen ausgelesenen und insbesondere auf die beschriebene Weise decodierten Heizkörperparameters P parametriert, insbesondere durch Übertragen des mindestens einen, insbesondere auch die beschriebene Weise decodierten, Heizkörperparameters P von der Parametriereinheit 5 über die Datenübertragungsverbindung auf den elektronischen Heizkostenverteiler 4.

Die beschriebene Lösung ermöglicht die einfache Parametrierung des elektronischen Heizkostenverteilers 4 beispielsweise mit dem K_{C}-Wert und/oder K_{Q}-Wert mittels des Heizkörperdatenspeichers 3, welcher beispielsweise als ein fernauslesbares, insbesondere optoelektronisch auslesbares, Etikett ausgebildet ist, und mittels der Parametriereinheit 5. Die Parametriereinheit 5 weist dabei mindestens zwei voneinander unabhängige Kommunikationskanäle auf. Den Kommunikationskanal, über welchen das optoelektronische Auslesen des Heizkörperdatenspeichers 3 erfolgt, und den Kommunikationskanal über die Datenübertragungsverbindung zwischen Parametriereinheit 5 und elektronischem Heizkostenverteiler 4.

Der fernauslesbare, d. h. optoelektronisch auslesbare, Heizkörperdatenspeicher 3, beispielsweise als Etikett ausgebildet, befindet sich auf dem Heizkörper 2, auf dem der elektronische Heizkostenverteiler 4 montiert werden soll oder im dargestellten Beispiel gerade montiert worden ist, und enthält, wie bereits beschrieben, beispielsweise zumindest die Informationen zur Heizkörperleistung und/oder zur thermischen Kopplung des elektronischen Heizkostenverteilers 4.

Die Parametriereinheit 5 ermittelt zumindest diese beiden Informationen oder zumindest eine dieser beiden Informationen berührungslos, über den ersten Kommunikationskanal, d. h. durch optoelektronisches Auslesen des Heizkörperdatenspeichers 3, wandelt diese beispielsweise in eine für den elektronischen Heizkostenverteiler 4 anwendbare Form und parametriert den elektronischen Heizkostenverteiler 4 über den zweiten Kommunikationskanal, d. h. über die Datenübertragungsverbindung zwischen Parametriereinheit 5 und elektronischem Heizkostenverteiler 4.

Die beschriebene Lösung stellt ein möglichst schnell einführbares und einfach anwendbares System zur fehlerfreien Parametrierung von elektronischen Heizkostenverteilern 4 zur Verfügung. Insbesondere wird dadurch eine Nutzung lizenzpflichtiger Heizkörperdatenbanken unnötig.

Mittels des Heizkörperdatenspeichers 3 auf dem Heizkörper 2 können alle für die Parametrierung des elektronischen Heizkostenverteilers 4 benötigten Daten am Einsatzort des elektronischen Heizkostenverteilers 4 bereitgestellt werden, so dass Zeit und Kosten zur Ermittlung der korrekten Parametrierwerte gespart werden. Die korrekte Parametrierung erhöht die Verteilgenauigkeit, so dass sowohl ein Messdienst als auch ein Wohnungsunternehmen weniger Reklamationen erwarten können.

Alternativ zum optoelektronisch auslesbaren Heizkörperdatenspeicher 3 kann der Heizkörperdatenspeicher 3 beispielsweise auch als ein RFID-Tag oder NFC-Tag ausgebildet sein, d. h. als ein mittels RFID oder NFC auslesbarer Heizkörperdatenspeicher 3. Die Parametrierung des elektronischen Heizkostenverteilers 4 erfolgt dann wie oben beschrieben, mit dem Unterschied, dass der mindestens eine Heizkörperparameter P nicht optoelektronisch ausgelesen wird, sondern über eine RFID-Verbindung oder NFC-Verbindung. D. h. die Leseeinheit 6 der Parametriereinheit 5 ist dann entsprechend als eine RFID-Leseeinheit oder NFC-Leseeinheit ausgebildet. Die Speicherung im Heizkörperdatenspeicher 3 erfolgt dann entsprechend nicht in grafischer, d. h. optoelektronisch auslesbarer, sondern in elektronischer Form.

Im Folgenden wird eine Auswahl möglicher Ausführungsbeispiele genannt.

Beispielsweise ist der Heizkörperdatenspeicher 3 optoelektronisch auslesbar und der mindestens eine Heizkörperparameter P ist in Form eines QR-Codes gespeichert. Die Parametriereinheit 5 ist beispielsweise als ein tragbarer Computer, insbesondere als ein Laptop, ausgebildet, welcher als Leseeinheit 6 einen QR-Code-Scanner aufweist oder an welchem ein solcher angeschlossen ist. Die Datenübertragungsschnittstelle 8 zum Parametrieren des elektronischen Heizkostenverteilers 4 ist beispielsweise als ein IrDA-Kopf (für eine Infrarot-Datenübertragung) ausgebildet, welcher beispielsweise an dem tragbaren Computer angeschlossen ist.

In einem anderen Ausführungsbeispiel ist der Heizkörperdatenspeicher 3 beispielsweise als ein NFC-Tag ausgebildet. Die Parametriereinheit 5 ist beispielsweise als ein tragbarer Computer, insbesondere als ein Laptop, ausgebildet, welcher als Leseeinheit 6 einen NFC-Reader aufweist oder ein solcher ist am tragbaren Computer angeschlossen. Die Datenübertragungsschnittstelle 8 zum Parametrieren des elektronischen Heizkostenverteilers 4 ist beispielsweise als eine Bluetooth-Schnittstelle ausgebildet.

In einem anderen Ausführungsbeispiel ist der Heizkörperdatenspeicher 3 beispielsweise als ein RFID-Tag ausgebildet. Die Parametriereinheit 5 weist als Leseeinheit 6 beispielsweise einen integrierten RFID-Reader auf und weist als Datenübertragungsschnittstelle 8 zum Parametrieren des elektronischen Heizkostenverteilers 4 Nadelkontakte zur Kontaktierung einer Elektronik des elektronischen Heizkostenverteilers 4 auf

In anderen Ausführungsbeispielen sind auch andere Kombinationen der genannten Komponenten, insbesondere des Heizkörperdatenspeichers 3, der Parametriereinheit 5 sowie deren Leseeinheit 6 und Datenübertragungsschnittstelle 8 und daraus resultierend der korrespondierenden Datenübertragungsschnittstelle 9 des elektronischen Heizkostenverteilers 4 möglich.

### BEZUGSZEICHENLISTE

- 1: Heizkörperanordnung
- 2: Heizkörper
- 3: Heizkörperdatenspeicher
- 4: Heizkostenverteiler
- 5: Parametriereinheit
- 6: Leseeinheit
- 7: Decodiereinheit
- 8: Datenübertragungsschnittstelle der Parametriereinheit
- 9: Datenübertragungsschnittstelle des Heizkostenverteilers
- 10: Vorrichtung

- P: Heizkörperparameter
- C: optoelektronisch lesbarer Code

## Patentansprüche

1. Heizkörperdatenspeicher (3) mit mindestens einem zur Parametrierung eines elektronischen Heizkostenverteilers (4) verwendbaren gespeicherten Heizkörperparameter (P) eines Heizkörpers (2),
**gekennzeichnet durch** eine Ausbildung als ein optoelektronisch auslesbarer Datenspeicher.

2. Heizkörperdatenspeicher (3) nach Anspruch 1,
**dadurch gekennzeichnet, dass** der mindestens eine Heizkörperparameter (P) als ein optoelektronisch lesbarer Code (C) gespeichert ist, insbesondere als eine optoelektronisch lesbare Schrift, insbesondere als ein eindimensionaler oder zweidimensionaler Code, insbesondere als ein Strichcode oder als ein QR-Code.

3. Heizkörperdatenspeicher (3) nach einem der vorhergehenden Ansprüche,
**dadurch gekennzeichnet, dass** als Heizkörperparameter (P) mindestens eine Information bezüglich einer Heizkörperleistung und/oder mindestens eine Information bezüglich einer thermischen Kopplung des elektronischen Heizkostenverteilers (4) mit dem Heizkörper (2) gespeichert sind/ist, insbesondere ein K_{Q}-Wert und/oder ein K_{C}-Wert des Heizkörpers (2).

4. Heizkörperdatenspeicher (3) nach einem der vorhergehenden Ansprüche, ausgebildet als ein am Heizkörper (2) anordbares Etikett.

5. Heizkörperanordnung (1), umfassend einen Heizkörper (2) und einen daran angeordneten Heizkörperdatenspeicher (3) nach einem der vorhergehenden Ansprüche mit mindestens einem gespeicherten Heizkörperparameter (P) des Heizkörpers (2).

6. Parametriereinheit (5), umfassend mindestens eine optoelektronische Leseeinheit (6) zum Auslesen eines Heizkörperdatenspeichers (3) nach einem der Ansprüche 1 bis 4 und mindestens eine Datenübertragungsschnittstelle (8) für eine Datenübertragungsverbindung zu einem elektronischen Heizkostenverteiler (4).

7. Parametriereinheit (5) nach Anspruch 6,
umfassend eine Decodiereinheit (7) zum Decodieren des optoelektronisch gelesenen Codes (C).

8. Elektronischer Heizkostenverteiler (4), ausgebildet und eingerichtet zur Parametrierung mittels einer Parametriereinheit (5) nach Anspruch 6 oder 7.

9. Vorrichtung (10) zum Parametrieren eines elektronischen Heizkostenverteilers (4), insbesondere nach Anspruch 8, umfassend einen Heizkörperdatenspeicher (3) nach einem der Ansprüche 1 bis 4 und eine Parametriereinheit (5) nach Anspruch 6 oder 7.

10. Verfahren zum Parametrieren eines elektronischen Heizkostenverteilers (4), insbesondere nach Anspruch 8, mittels einer Vorrichtung (10) nach Anspruch 9, wobei mittels der Parametriereinheit (5) mindestens ein Heizkörperparameter (P) aus dem Heizkörperdatenspeicher (3) ausgelesen wird, eine Datenübertragungsverbindung zwischen der Parametriereinheit (5), insbesondere zwischen der Datenübertragungsschnittstelle (8) der Parametriereinheit (5), und dem elektronischen Heizkostenverteiler (4), insbesondere einer Datenübertragungsschnittstelle (9) des elektronischen Heizkostenverteilers (4), aufgebaut wird und der elektronische Heizkostenverteiler (4) mittels des mindestens einen ausgelesenen Heizkörperparameters (P) parametriert wird.

11. Verfahren nach Anspruch 10,
**dadurch gekennzeichnet, dass** mittels der Parametriereinheit (5) mindestens ein optoelektronisch lesbarer Code (C) mit dem mindestens einen Heizkörperparameter (P) aus dem Heizkörperdatenspeicher (3) ausgelesen und durch die Decodiereinheit (7) decodiert wird, die Datenübertragungsverbindung zwischen der Parametriereinheit (5), insbesondere zwischen der Datenübertragungsschnittstelle (8) der Parametriereinheit (5), und dem elektronischen Heizkostenverteiler (4), insbesondere der Datenübertragungsschnittstelle (9) des elektronischen Heizkostenverteilers (4), aufgebaut wird und der elektronische Heizkostenverteiler (4) mittels des mindestens einen ausgelesenen Heizkörperparameters (P) parametriert wird.
